# EUROPÄISCHE PATENTANMELDUNG

(11) **EP 1 790 229 A1**
(43) Veröffentlichungstag der Anmeldung: **30.05.2007**
(21) Anmeldenummer: 05025748.4
(22) Anmeldetag: 25.11.2005
(51) Int. Cl.: A01N 43/82, A01N 25/04

(54) **Wässrige Suspensionskonzentrate aus Oxadiazolherbiziden**

(71) Anmelder: Bayer CropScience AG, 40789 Monheim (DE)
(72) Erfinder: Frisch, Gerhard, 61273 Wehrheim (DE); Ebersold, Ulrike, 65795 Hattersheim (DE); Rude, Janine, 65830 Kriftel (DE); Deckwer, Roland, 65929 Frankfurt (DE)

(57) **Zusammenfassung**

Die Erfindung betrifft wässrige Suspensionskonzentrate, enthaltend
(1) einen oder mehrere Wirkstoffe aus der Gruppe der Oxadiazole,
(2) ein oder mehrere Tenside auf Basis substituierter Phenolether,
(3) einen oder mehrere Verdicker auf Aluminiumsilikatbasis, und
(4) gegebenenfalls weitere Formulierungshilfsmittel, sowie
(5) gegebenenfalls weitere, von Komponente (2) verschiedene Tenside.

Hiermit werden neben der Vermeidung von Kristallwachstum unter anderem auch hochkonzentrierte wässrige herbizide Mittel mit guter Wirkstoffverteilung ermöglicht.

## Beschreibung

Die Erfindung betrifft das technische Gebiet der Formulierungen von Wirkstoffen.

Wirkstoffe können prinzipiell auf viele verschiedene Arten formuliert werden, wobei die Eigenschaften der Wirkstoffe und Art der Formulierung Probleme hinsichtlich der Herstellbarkeit, Stabilität, Anwendbarkeit und Wirksamkeit der Formulierungen aufwerfen können. Außerdem sind bestimmte Formulierungen aus ökonomischen und ökologischen Gründen vorteilhafter als andere.

Formulierungen auf Wasserbasis haben in der Regel den Vorteil, dass sie einen geringen Anteil oder keinen Anteil an organischen Lösungsmitteln benötigen.

Andererseits besteht generell ein Bedarf an hochkonzentrierten Formulierungen von Wirkstoffen, weil die höhere Konzentration vielerlei Vorteile hat; beispielsweise wird mit hochkonzentrierten Formulierungen ein geringerer Verpackungsaufwand nötig als mit niedrigkonzentrierten Formulierungen. Entsprechend reduziert sich der Aufwand für Herstellung, Transport und Lagerung; auch vereinfacht sich z.B. die Zubereitung der in der Landwirtschaft eingesetzten Spritzbrühen durch die kleineren Mengen an beispielsweise Pflanzenschutzmittel, welche gehandhabt werden müssen, wie z.B. beim Abfüll- und Verrührvorgang.

Höher konzentrierte wässrige Suspensionskonzentrate sind bekannt wie z.B. von Schwefel (EP-A-0220655) und Metamitron (EP-A-0620971), die Mischungen aus Formaldehydkondensationsprodukten, bevorzugt Ligninsulfonaten und Netzmittel, als Grundlage haben.

Bei den Wirkstoffen aus der Gruppe der Oxadiazole handelt es sich um hochwirksame Herbizide mit Wirkung gegen Schadpflanzen in Pflanzenkulturen. Allerdings reagiert diese Wirkstoffgruppe problematisch beim Formulierungstyp des höher konzentrierten wässrigen Suspensionskonzentrates auf Wasserbasis im Hinblick auf das Lösungsverhalten. In Standard-Suspensionskonzentraten wird sehr schnell eine kritische Grenze überschritten, ab deren Wert mit einem Kristallwachstum zu rechnen ist, das dann durch Sedimentation der gewachsenen Kristalle zu einer instabilen Formulierung führt. Darüber hinaus können die durch das Wachstum gebildete Kristalle in der Formulierung zur Verstopfung der Filter und der Düsen während der Applikation führen, mit der gravierenden Folge einer ungleichmäßigen Ausbringung oder sogar die Ausbringung gänzlich verhindern, wodurch es zu teilweisen bis vollständigen Wirkungsverlusten kommt.

Der vorliegenden Erfindung lag somit die Aufgabe zugrunde, eine Formulierung vom Typ eines höher konzentrierten wässrigen Suspensionskonzentrates auf Wasserbasis bereitzustellen, die die aufgeführten Nachteile, insbesondere die Bildung des Kristallwachstums, überwindet, mit dem Ziel einer besseren Verteilung als Grundlage für eine optimale Applikation und Wirkung.

Überraschenderweise wurde gefunden, dass diese Aufgabe durch die wässrigen Suspensionskonzentrate der vorliegenden Erfindung gelöst wird.

Gegenstand der Erfindung ist ein wässriges Suspensionskonzentrat, enthaltend
(1) einen oder mehrere Wirkstoffe aus der Gruppe der Oxadiazole,
(2) ein oder mehrere Tenside auf Basis substituierter Phenolether,
(3) einen oder mehrere Verdicker auf Aluminiumsilikatbasis.

Darüber hinaus kann das erfindungsgemäße wässrige Suspensionskonzentrat als weitere Komponenten gegebenenfalls noch enthalten:
(4) weitere Formulierungshilfsmittel, und
(5) weitere, von Komponente (2) verschiedene Tenside.

Unter dem Begriff "wässrige Suspensionskonzentrate" werden Suspensionskonzentrate auf Basis von Wasser verstanden. Der Anteil an Wasser in den erfindungsgemäßen Suspensionskonzentraten kann im allgemeinen 25 - 98 Gew.-%, vorzugsweise 35 - 85 Gew.-%, betragen; dabei bezieht sich die Angabe "Gew.-%" (Gewichtsprozent) hier und in der gesamten Beschreibung, wenn nicht anders definiert, auf das relative Gewicht der jeweiligen Komponente bezogen auf das Gesamtgewicht der Formulierung.

Bei den Wirkstoffen (Komponente 1) handelt es sich um Wirkstoffe aus der Gruppe der Oxadiazole. Das "Pesticide Manual" (PM), 12. Auflage, The British Crop Protection Council (2000), nennt als Vertreter aus der Gruppe der Oxadiazole beispielsweise:
Oxadiargyl (PM-Nr. 578; Formel I) 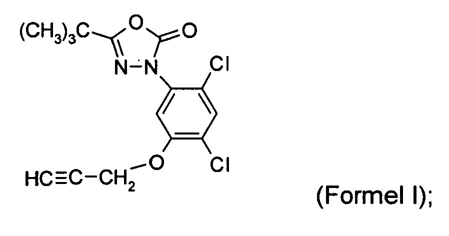
Oxadiazon (PM-Nr. 579; Formel II)

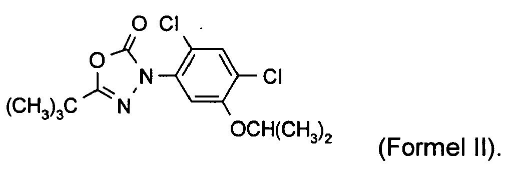

Als Wirkstoffe aus der Gruppe der Oxadiazole kommen bevorzugt Oxadiargyl und Oxadiazon in Betracht.

Der Anteil an Wirkstoffen (Komponente 1) in den erfindungsgemäßen Suspensionskonzentraten beträgt 5-60 Gew.-%, bevorzugt 10-50 Gew.-%, besonders bevorzugt 15-48 Gew.-%.

In einer besonderen Ausführungsform der Erfindung liegen die Wirkstoffe (Komponente 1) mit einem Mindestgehalt von 300 g Wirkstoff/L, bevorzugt 350 - 820 g Wirkstoff/L an der gesamten Formulierung vor.

Bei den Tensiden (Komponente 2) auf Basis substituierter Phenolether handelt es sich beispielsweise um mono-, di-, und bevorzugt trisubstituierte Phenole, die alkoxyliert sein können, z.B. ethoxyliert und/oder propoxyliert und/oder butoxyliert. Hierbei kann die Anzahl der Alkylenoxy-Einheiten im Bereich zwischen 1 und 100 liegen, vorzugsweise 3 - 60, besonders bevorzugt 5 - 25. Phenolsubstituenten sind bevorzugt Styryl- oder Isoalkylreste. Beispiele sind Phenyl-(C₁-C₄)alkyl-ether oder (poly)alkoxylierte Phenole [= Phenol-(poly)alkylenglykolether], beispielsweise mit 1 bis 50 Alkylenoxy-Einheiten im (Poly)alkylenoxyteil, wobei der Alkylenteil vorzugsweise jeweils 2 bis 4 C-Atome aufweist, vorzugsweise mit 3 bis 10 mol Alkylenoxid umgesetztes Phenol, (Poly)alkylphenole oder (Poly)alkylphenolalkoxylate [= Polyalkylphenol-(poly)alkylenglykolether], beispielsweise mit 1 bis 12 C-Atomen pro Alkylrest und 1 bis 150 Alkylenoxy-Einheiten im Polyalkylenoxyteil, vorzugsweise mit 1 bis 50 mol Ethylenoxid umgesetztes Tri-n-butylphenol oder Triisobutylphenol, Polyarylphenole oder Polyarylphenolalkoxylate [= Polyarylphenol-(poly)alkylenglykolether], beispielsweise Tristyrylphenolpolyalkylenglykolether mit 1 bis 150 Alkylenoxy-Einheiten im Polyalkylenoxyteil, vorzugsweise mit 1 bis 50 mol Ethylenoxid umgesetztes Tristyrylphenol.

Beispiele für derartige Tenside sind Soprophor^{®} 3D33, Soprophor^{®} BSU, Soprophor^{®} CY/8 (Rhodia) und Hoe^{®} S3474 und in Form der Sapogenat^{®} T-Produkte (Clariant), beispielsweise Sapogenat^{®} T 100.

Der Anteil an Tensiden in den erfindungsgemäßen Suspensionskonzentraten beträgt 0,1 - 20 Gew.-%, bevorzugt 0,5 - 10 Gew.-%, besonders bevorzugt 1 - 7 Gew.-%.

Als Verdicker (Komponente 3) auf Aluminiumsilikatbasis kommen beispielsweise in Frage solche wie Hectorite, Montmorillonite, Saponite, Kaolinite, Bentonite, Attapulgite etc.

Beispiele für derartige Verdicker sind die Attagele^{®} von Engelhardt Corp, die Bentone^{®}-Reihe von Elementis oder die Rhodopol^{®}-Produkte von Rhodia.

Der Anteil an Verdickern auf Aluminiumsilikatbasis in den erfindungsgemäßen Suspensionskonzentraten beträgt 0,01 - 5 Gew.-%, bevorzugt 0,1 - 3,5 Gew.-%.

Weiterhin können diesen Formulierungen noch weitere Formulierungshilfsmittel wie Entschäumer, Frostschutzmittel, Konservierungsmittel, Farbstoffe oder Dünger, sowie von Komponente (2) verschiedene Tenside zugesetzt werden.

Der Anteil an diesen Formulierungshilfsmitteln in den erfindungsgemäßen Suspensionskonzentraten beträgt 0,1 - 22 Gew.-%, vorzugsweise 1 - 15 Gew.-%, besonders bevorzugt 1,5 - 12 Gew.-%.

Als Entschäumer kommen Entschäumer auf Siliconbasis von Wacker, Rhodia, Dow Corning und auf Acetylenbasis, wie beispielsweise solche von Airproducts, in Frage.

Als Frostschutzmittel kommen beispielsweise Glykol, Propylenglykol, Glyzerin sowie Harnstoff in Frage.

Als Konservierungsmittel kommt beispielsweise Acticide^{®} MBS in Frage.

Beispiele für weitere, von Komponente (2) verschiedene Tenside sind nachfolgend aufgeführt, worin EO=Ethylenoxid-Einheiten, PO=Propylenoxid-Einheiten und BO=Butylenoxid-Einheiten bedeutet:
1) C₁₀-C₂₄-Alkohole, die alkoxyliert sein können, z.B. mit 1 - 60 Alkylenoxideinheiten, vorzugsweise 1-60 EO und/oder 1-30 PO und/oder 1-15 BO in beliebiger Reihenfolge. Die terminalen Hydroxygruppen dieser Verbindungen können durch einen Alkyl-,Cycloalkyl-oder Acylrest mit 1-24 Kohlenstoffatomen endgruppenverschlossen sein. Beispiele für derartige Verbindungen sind:
   Genapol^{®}C-,L-,O-,T-,UD-,UDD-,X-Produkte von Clariant, Plurafac^{®}- und Lutensol^{®}A-,AT-,ON-,TO-Produkte von BASF, Marlipal^{®}24- und 013 Produkte von Condea, Dehypon^{®}-Produkte von Henkel, Ethylan^{®}-Produkte von Akzo-Nobel wie Ethylan CD 120.
2) Anionische Derivate der unter 1) beschriebenen Produkte in Form von Ethercarboxylaten, Sulfonaten, Sulfaten und Phosphaten und deren anorganischen (z.B. Alkali und Erdalkali) und organischen Salzen (z.B. auf Amin- oder Alkanolaminbasis) wie Genapol^{®}LRO, Sandopan^{®}-Produkte, Hostaphat/Hordaphos^{®}-Produkte von Clariant.
   Copolymere bestehend aus EO, PO und/oder BO Einheiten wie zum Beispiel Blockcopolymere wie die Pluronic^{®}-Produkte von der BASF und die Synperonic^{®}-Produkte von Uniquema mit einem Molekulargewicht von 400 bis 10⁸.
   Alkylenoxydaddukte von C₁ - C₉ Alkoholen wie Atlox^{®}5000 von Uniquema oder Hoe^{®}-S3510 von Clariant.
3) Fettsäure- und Triglyceridalkoxylate wie die Serdox^{®}NOG-Produkte von Condea oder alkoxylierte Pflanzenöle wie Sojaöl, Rapsöl, Maiskeimöl, Sonnenblumenöl, Baumwollsaatöl, Leinöl, Kokosöl, Palmöl, Distelöl, Walnussöl, Erdnussöl, Olivenöl oder Rhizinusöl, insbesondere Rapsöl, wobei unter den Pflanzenölen auch deren Umesterungsprodukte verstanden werden, z.B. Alkylester wie Rapsölmethylester oder Rapsölethylester, beispielsweise die Emulsogen^{®}-Produkte von Clariant, Salze von aliphatischen, cycloaliphatischen und olefinischen Carbonsäuren und Polycarbonsäuren, sowie Alpha-Sulfofettsäureester wie von Henkel erhältlich.
4) Fettsäureamidalkoxylate wie die Comperlan^{®}-Produkte von Henkel oder die Amam^{®}-Produkte von Rhodia.
   Alkylenoxydaddukte von Alkindiolen wie die Surfynol^{®}-Produkte von Air Products. Zuckerderivate wie Amino- und Amidozucker von Clariant, Glukitole von Clariant, Alkylpolyglycoside in Form der APG^{®}-Produkte von Henkel oder wie Sorbitanester in Form der Span^{®}- oder Tween^{®}-Produkte von Uniquema oder Cyclodextrinester oder -ether von Wacker.
5) Oberflächenaktive Cellulose- und Algin-, Pektin- und Guarderivate wie die Tylose^{®}-Produkte von Clariant, die Manutex^{®}-Produkte von Kelco und Guarderivate von Cesalpina.
   Alkylenoxydaddukte auf Polyolbasis wie Polyglykol^{®}-Produkte von Clariant.
   Grenzflächenaktive Polyglyceride und deren Derivate von Clariant.
6) Sulfosuccinate, Alkansulfonate, Paraffin- und Olefinsulfonate wie Netzer IS^{®}, Hoe^{®}S1728, Hostapur^{®}OS, Hostapur^{®}SAS von Clariant, Triton^{®}GR7ME und GR5 von Union Carbide, Empimin^{®}-Produkte von Albright und Wilson, Marlon^{®}-PS65 von Condea.
7) Sulfosuccinamate wie die Aerosol^{®}-Produkte von Cytec oder die Empimin^{®}-Produkte von Albright und Wilson.
8) Alkylenoxidaddukte von Fettaminen, quartäre Ammonium-Verbindungen mit 8 bis 22 Kohlenstoffatomen (C₈-C₂₂) wie z.B. die Genamin^{®}C,L,O,T-Produkte von Clariant.
9) Oberflächenaktive, zwitterionische Verbindungen wie Tauride, Betaine und Sulfobetaine in Form von Tegotain^{®}-Produkte von Goldschmidt, Hostapon^{®}T- und Arkopon^{®}T-Produkte von Clariant.
10) Oberflächenaktive Verbindungen auf Silikon- bzw. Silanbasis wie die Tegopren^{®}-Produkte von Goldschmidt und die SE^{®}-Produkte von Wacker, sowie die Bevaloid^{®}-, Rhodorsil^{®}- und Silcolapse^{®}-Produkte von Rhodia (Dow Corning, Reliance, GE, Bayer).
11) Per- oder polyfluorierte oberflächenaktive Verbindungen wie Fluowet^{®}-Produkte von Clariant, die Bayowet^{®}-Produkte von Bayer, die Zonyl^{®}-Produkte von DuPont und Produkte dieser Art von Daikin und Asahi Glass.
12) Grenzflächenaktive Sulfonamide z.B. von Bayer.
13) Grenzflächenaktive Polyacryl- und Polymethacrylderivate wie die Sokalan^{®}-Produkte von der BASF.
14) Oberflächenaktive Polyamide wie modifizierte Gelatine oder derivatisierte Polyasparginsäure von Bayer und deren Derivate.
15) Tensidische Polyvinylverbindungen wie modifiziertes Polyvinylpyrollidon wie die Luviskol^{®}-Produkte von BASF und die Agrimer^{®}-Produkte von ISP oder die derivatisierten Polyvinylacetate wie die Mowilith^{®}-Produkte von Clariant oder die -butyrate wie die Lutonal^{®}-Produkte von der BASF, die Vinnapas^{®}- und die Pioloform^{®}-Produkte von Wacker oder modifizierten Polyvinylalkohole wie die Mowiol^{®}-Produkte von Clariant.
16) Oberflächenaktive Polymere auf Basis von Maleinsäureanhydrid und/oder Umsetzungsprodukten von Maleinsäureanhydrid, sowie Maleinsäureanhydrid und/oder Umsetzungsprodukte von Maleinsäureanhydrid beinhaltende Copolymere wie die Agrimer^{®}-VEMA-Produkte von ISP.
17) Oberfächenaktive Derivate von Montan-, Polyethylen-, und Polypropylenwachsen wie die Hoechst^{®}-wachse oder die Licowet^{®}-Produkte von Clariant.
18) Oberflächenaktive Phosphonate und Phosphinate wie Fluowet^{®}-PL von Clariant.
19) Poly- oder perhalogenierte Tenside wie beispielsweise Emulsogen^{®}-1557 von Clariant.
20) Verbindungen, die formal die Umsetzungsprodukte der oben genannten Phenole mit Schwefelsäure oder Phosphorsäure darstellen und deren mit geeigneten Basen neutralisierte Salze, beispielsweise der saure Phosphorsäureester des dreifach ethoxylierten Phenols, der saure Phosphorsäureester eines mit 9 mol Ethylenoxid umgesetzten Nonylphenols und der mit Triethanolamin neutralisierte Phosphorsäureester des Reaktionsproduktes von 20 mol Ethylenoxid und 1 mol Tristyrylphenol.
21) Benzolsulfonate wie Alkyl- oder Arylbenzolsulfonate, z.B. saure und mit geeigneten Basen neutralisierte (Poly)alkyl- und (Poly)aryl-benzolsulfonate, beispielsweise mit 1 bis 12 C-Atomen pro Alkylrest bzw. mit bis zu 3 Styroleinheiten im Polyarylrest, vorzugsweise (lineare) Dodecylbenzolsulfonsäure und deren öl-lösliche Salze wie beispielsweise das Calciumsalz oder das lsopropylammoniumsalz der Dodecylbenzolsulfonsäure.

Bei den Alkylenoxy-Einheiten sind Ethylenoxy-, Propylenoxy- und Butylenoxy-Einheiten, insbesondere Ethylenoxy-Einheiten bevorzugt.

Beispiele für Tenside aus der Gruppe der Tenside auf nichtaromatischer Basis sind die Tenside der vorstehend genannten Gruppen 1) bis 19), vorzugsweise der Gruppen 1), 2), 6) und 8).

Beispiele für Tenside aus der Gruppe der Tenside auf Aromatenbasis sind die Tenside der vorstehend genannten Gruppen 20) und 21), vorzugsweise
mit 4 bis 10 mol Ethylenoxid umgesetztes Phenol, kommerziell beispielsweise in Form der Agrisol^{®}-Produkte (Akcros) erhältlich,
mit 4 bis 50 mol Ethylenoxid umgesetztes Nonylphenol, kommerziell beispielsweise in Form der Arkopal^{®}-Produkte (Clariant) erhältlich,
mit 1 bis 50 mol Ethylenoxid umgesetztes Tristyrylphenol, beispielsweise aus der Soprophor^{®}-Reihe (Rhodia) wie Soprophor^{®} FL, Soprophor^{®} 4D-384, und
saures (lineares) Dodecylbenzolsulfonat, kommerziell beispielsweise in Form der Marlon^{®}-Produkte (Hüls) erhältlich.

Die Herstellung der erfindungsgemäßen Suspensionskonzentrate erfolgt in bekannter Weise (siehe Winnacker-Küchler, "Chemische Technologie", Band 7, C. Hanser Verlag München, 4. Aufl. 1986), z.B. durch Nassvermahlung der Komponenten, welches in geeigneten Mühlen, z.B. in Perlmühlen (wie z.B. diskontinuierliche Perlmühlen, z.B. der Fa. Drais oder kontinuierliche Perlmühlen, der z.B. Fa. Bachofen), oder Kolloidmühlen (wie z.B. Zahnkolloidmühlen, z.B. der Fa. Probst + Claasen), stattfinden kann.

Hierbei wird solange vermahlen bis 50 % der Partikel eine Größe von kleiner 4 µm aufweisen (d50 ≤ 4 µm), um Sedimentation zu verhindern.

In einer ganz besonders bevorzugten Ausführungsform der Erfindung weisen die Wirkstoffe (Komponente 1) im erfindungsgemäßen Suspensionskonzentrat einem Mindestgehalt von 300 g Wirkstoff/L, bevorzugt 350 - 820 g Wirkstoff/L, an der gesamten Formulierung auf und zusätzlich weisen nach der Vermahlung bis 50 % der Partikel der gesamten Formulierung eine Größe von kleiner 4 µm auf (d50 ≤ 4 µm).

Die Erfindung betrifft weiterhin Mittel, erhältlich aus dem erfindungsgemäßen Suspensionskonzentrat durch Verdünnen mit Flüssigkeiten, bevorzugt Wasser.

Es kann vorteilhaft sein, den so erhaltenen Mitteln weitere Wirkstoffe, bevorzugt agrochemische Wirkstoffe (z.B. als Tankmischpartner in Form entsprechender Formulierungen) und/oder zur Anwendung übliche Hilfs- und Zusatzstoffe, z.B. selbstemulgierende Öle wie Pflanzenöle oder Paraffinöle und/oder Düngemittel zuzugeben. Gegenstand der vorliegenden Erfindung sind daher auch solche Mittel, bevorzugt herbizide, auf Basis der erfindungsgemäßen Suspensionskonzentrate.

Hierbei umfasst der Begriff "agrochemische Wirkstoffe" alle Substanzen, die in den Bereichen Landwirtschaft, Gartenbau, Forstwirtschaft und Tierhaltung sowie im häuslichen Bereich und in der Vorratswirtschaft zum Einsatz kommen. Zu diesen agrochemischen Wirkstoffen gehören beispielsweise Herbizide, Insektizide, Akarizide, Rodentizide, Fungizide, Bakterizide, Nematizide, Algizide, Molluskizide, Virizide, Safener, Resistenz induzierende Wirkstoffe, als Repellent wirksame Wirkstoffe und wachstumsregulatorisch wirksame Wirkstoffe, Wirkstoffe mit und aus biologischen Organismen, sowie Düngemittel. Besonders bevorzugt sind herbizid, insektizid, akarizid, fungizid, bakterizid, virizid und wachstumsregulatorisch oder als Safener wirksame Wirkstoffe, ganz besonders bevorzugt sind Herbizide, Insektizide, Fungizide und Safener, davon wiederum bevorzugt herbizide Wirkstoffe.

Eine besondere Ausführungsform der Erfindung betrifft die Verwendung der aus den erfindungsgemäßen Suspensionskonzentraten erhältlichen Mittel zur Bekämpfung von unerwünschtem Pflanzenwuchs, im folgenden als "herbizides Mittel" bezeichnet.

Die herbiziden Mittel weisen eine ausgezeichnete herbizide Wirksamkeit gegen ein breites Spektrum wirtschaftlich wichtiger mono- und dikotyler Schadpflanzen auf.

Auch schwer bekämpfbare perennierende Unkräuter, die aus Rhizomen, Wurzelstöcken oder anderen Dauerorganen austreiben, werden gut erfasst. Dabei können die herbiziden Mittel z.B. im Vorsaat-, Vorauflauf- oder Nachauflaufverfahren ausgebracht werden. Im einzelnen seien beispielhaft einige Vertreter der mono- und dikotylen Unkrautflora genannt, die durch die herbiziden Mittel kontrolliert werden können, ohne dass durch die Nennung eine Beschränkung auf bestimmte Arten erfolgen soll.

Auf der Seite der monokotylen Unkrautarten werden z.B. Apera spica venti, Avena spp., Alopecurus spp., Brachiaria spp., Digitaria spp., Lolium spp., Echinochloa spp., Panicum spp., Phalaris spp., Poa spp., Setaria spp. sowie Bromus spp. wie Bromus catharticus, Bromus secalinus, Bromus erectus, Bromus tectorum und Bromus japonicus und Cyperusarten aus der annuellen Gruppe und auf seiten der perennierenden Spezies Agropyron, Cynodon, Imperata sowie Sorghum und auch ausdauernde Cyperusarten gut erfaßt.

Bei dikotylen Unkrautarten erstreckt sich das Wirkungsspektrum auf Arten wie z.B. Abutilon spp., Amaranthus spp., Chenopodium spp., Chrysanthemum spp., Galium spp. wie Galium aparine, lpomoea spp., Kochia spp., Lamium spp., Matricaria spp., Pharbitis spp., Polygonum spp., Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern.

Unter den spezifischen Kulturbedingungen im Reis vorkommende Schadpflanzen wie z.B. Echinochloa, Sagittaria, Alisma, Eleocharis, Scirpus und Cyperus werden von den herbiziden Mitteln ebenfalls hervorragend bekämpft.

Werden die herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird.

Die herbiziden Mittel zeichnen sich durch eine schnell einsetzende und lang andauernde herbizide Wirkung aus. Die Regenfestigkeit der Wirkstoffe in den herbiziden Mitteln ist in der Regel günstig. Als besonderer Vorteil fällt ins Gewicht, dass die in den herbiziden Mitteln verwendeten und wirksamen Dosierungen von herbiziden Verbindungen so gering eingestellt werden können, dass ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäße Kombination von Wirkstoffen wird eine erhebliche Reduzierung der nötigen Aufwandmenge der Wirkstoffe ermöglicht.

Die genannten Eigenschaften und Vorteile sind in der praktischen Unkrautbekämpfung von Nutzen, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen herbiziden Mittel hinsichtlich der beschriebenen Eigenschaften deutlich übertroffen.

Obgleich die herbiziden Mittel eine ausgezeichnete herbizide Aktivität gegenüber mono- und dikotylen Unkräutern aufweisen, werden Kulturpflanzen wirtschaftlich bedeutender Kulturen z.B. zweikeimblättriger Kulturen wie Soja, Baumwolle, Raps, Zuckerrüben, oder Gramineen-Kulturen wie Weizen, Gerste, Roggen, Hafer, Hirse, Reis oder Mais, nur unwesentlich oder gar nicht geschädigt. Die vorliegenden herbiziden Mittel eignen sich aus diesen Gründen sehr gut zur selektiven Bekämpfung von unerwünschtem Pflanzenwuchs in landwirtschaftlichen Nutzpflanzungen oder in Zierpflanzungen.

Darüber hinaus weisen die entsprechenden herbiziden Mittel hervorragende wachstumsregulatorische Eigenschaften bei Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die herbiziden Mittel auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt ist die Anwendung der herbiziden Mittel in wirtschaftlich bedeutenden transgenen Kulturen von Nutz- und Zierpflanzen, z. B. von Gramineen-Kulturen wie Weizen, Gerste, Roggen, Hafer, Hirse, Reis und Mais oder auch Kulturen von Zuckerrübe, Baumwolle, Soja, Raps, Kartoffel, Tomate, Erbse und anderen Gemüsesorten. Vorzugsweise können die herbiziden Mittel in Nutzpflanzenkulturen eingesetzt werden, welche gegenüber den phytotoxischen Wirkungen der Herbizide resistent sind bzw. gentechnisch resistent gemacht worden sind.

Bei der Anwendung der herbiziden Mittel in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den weiteren herbiziden Wirkstoffen, gegenüber denen die transgene Kultur resistent ist, sowie Beeinflussung von Wuchs und Ertrag der transgenen Kulturpflanzen.

Gegenstand der vorliegenden Erfindung ist somit auch ein Verfahren zur Bekämpfung von unerwünschtem Pflanzenwuchs, vorzugsweise in Pflanzenkulturen wie Getreide (z.B. Weizen, Gerste, Roggen, Hafer, Reis, Mais, Hirse), Zuckerrübe, Zuckerrohr, Raps, Baumwolle und Soja, besonders bevorzugt in monokotylen Kulturen wie Getreide, z.B. Weizen, Gerste, Roggen, Hafer, Kreuzungen davon wie Triticale, Reis, Mais und Hirse, dass dadurch gekennzeichnet ist, dass man die erfindungsgemäßen herbiziden Mittel auf die Schadpflanzen, Pflanzenteile, Pflanzensamen oder die Fläche auf der die Pflanzen wachsen, z.B. die Anbaufläche appliziert.

Die Pflanzenkulturen können auch gentechnisch verändert oder durch Mutationsselektion erhalten sein und sind bevorzugt tolerant gegenüber Acetolactatsynthase (ALS)-Inhibitoren.

Das Kristallwachstum wird in den erfindungsgemäßen Suspensionskonzentraten fast vollständig vermieden bei, beispielsweise für Pflanzenschutzmittel, üblichen Lagerbedingungen, wodurch eine bessere Verteilung, beispielsweise im herbiziden Mittel, ermöglich wird; als Grundlage für eine optimale Applikation und Wirkung, neben den grundsätzlichen Vorteilen, dass flüssige Formulierungen unter anderem leichter zu handhaben sind als feste und im Gegensatz zu diesen nicht stäuben.

Die erfindungsgemäßen Suspensionskonzentrate, zeigen zusätzlich überraschenderweise hervorragende dispergierende und stabilisierende Eigenschaften nach dem weiteren Verdünnen mit Flüssigkeiten, bevorzugt Wasser.

Daneben ergeben die erfindungsgemäßen Suspensionskonzentrate Langzeit lagerstabile und anwendungstechnisch einwandfreie Formulierungen.

### Beispiel

### 1. Herstellung:

Wasser wird in einem Kessel vorgelegt und über eine Kolloidmühle im Kreislauf umgepumpt. Es werden Verdicker (z.B. Attagel^{®}; Bentone^{®}; Rhodopol^{®}) und gegebenenfalls Formulierungshilfsmittel, wie beispielsweise Konservierungsmittel (z.B. Acticide^{®}), zugegeben, gefolgt von den Tensiden (z.B. Soprophor^{®}). Als letzte Komponente wird der Wirkstoff zugefügt. Danach wird die gesamte Mischung über die Kolloidmühle in einen weiteren Kessel überführt. Diese Mischung wird dann durch Nassvermahlung mittels Perlmühlen vermahlen.

### 2. Zusammensetzungen:

**Tabelle I - Formulierungsbeispiele Nr. 1 - 10**

| Beispiel-Nr.: | 1 | 2 | 3 | 4 | 5 | 6 | 7 | 8 | 9 | 10 |
|---|---|---|---|---|---|---|---|---|---|---|
| Oxadiargyl | 40 | 44 | 45 | 46 | 48 | 50 | - | - | - | - |
| Oxadiazon | - | - | - | - | - | - | 36 | 40 | 45 | 46 |
| Attagel^{®} 50 | - | - | - | - | - | 0,4 | - | 0,5 | 0,35 | 0,3 |
| Bentone^{®} SD 1 | - | - | - | - | 0,3 | - | - | - | - | - |
| Bentone^{®} EW | 0,1 | 0,15 | 0,1 | 0,15 | - | 0,3 | 0,15 | - | - | 0,2 |
| Rhodopol^{®} 23 | 0,2 | 0,08 | 0,1 | 0,1 | - | - | 0,2 | 0,1 | 0,07 | - |
| Acticide^{®} MBS | 0,1 | 0,1 | 0,1 | 0,1 | - | - | 0,1 | 0,1 | 0,1 | - |
| Soprophor^{®} BSU | 2,2 | 1,9 | 2,1 | 2,0 | 4,0 | 3,8 | 2,1 | 1,8 | 2,6 | 4,1 |
| Soprophor^{®} 3D33 | 1 | 1,5 | 1,2 | 1,4 | - | - | 1,0 | 1,2 | 1,3 | - |
| Soprophor^{®} CY/8 | 0,4 | 0,7 | 0,5 | 0,6 | 0,8 | 0,7 | 0,45 | 0,5 | 0,9 | 0,6 |
| Wasser | ad 100 | ad 100 | ad 100 | ad 100 | ad 100 | ad 100 | ad 100 | ad 100 | ad 100 | ad 100 |

| | | | | | | | | | | |
|---|---|---|---|---|---|---|---|---|---|---|
| Alle Angaben in Gew.-% | | | | | | | | | | |

Die in Tabelle I aufgelisteten erfindungsgemäßen Suspensionskonzentrate weisen die gewünschten Eigenschaften auf.

## Patentansprüche

1. Wässriges Suspensionskonzentrat, enthaltend
(1) einen oder mehrere Wirkstoffe aus der Gruppe der Oxadiazole,
(2) ein oder mehrere Tenside auf Basis substituierter Phenolether,
(3) einen oder mehrere Verdicker auf Aluminiumsilikatbasis.

2. Suspensionskonzentrat gemäß Anspruch 1, zusätzlich enthaltend weitere Formulierungshilfsmittel (Komponente 4).

3. Suspensionskonzentrat gemäß Anspruch 1 oder 2, zusätzlich enthaltend weitere, von Komponente (2) verschiedene Tenside (Komponente 5).

4. Suspensionskonzentrat gemäß einem oder mehreren der Ansprüche 1 bis 3, enthaltend als Wirkstoff (Komponente 1) Oxadiargyl.

5. Suspensionskonzentrat gemäß einem oder mehreren der Ansprüche 1 bis 3, enthaltend als Wirkstoff (Komponente 1) Oxadiazon.

6. Suspensionskonzentrat gemäß einem oder mehreren der Ansprüche 1 bis 5, wobei die Wirkstoffe (Komponente 1) mit einem Mindestgehalt von 300 g Wirkstoff/L an der gesamten Formulierung aufweisen und/oder nach der Vermahlung bis 50 % der Partikel der gesamten Formulierung eine Größe von kleiner 4 µm aufweisen.

7. Verfahren zur Herstellung einer Suspensionskonzentrates gemäß einem oder mehreren der Ansprüche 1 bis 6, wobei die Komponenten nass vermahlen werden.

8. Mittel, erhältlich aus einem Suspensionskonzentrat gemäß einem oder mehreren der Ansprüche 1 bis 6 durch Verdünnen mit Flüssigkeiten, bevorzugt Wasser.

9. Verwendung eines Suspensionskonzentrates gemäß einem oder mehreren der Ansprüche 1 - 6 oder einem Mittel gemäß Anspruch 8 zur Bekämpfung unerwünschten Pflanzenwuchses.

10. Verfahren zur Bekämpfung von unerwünschtem Pflanzenwuchs, **dadurch gekennzeichnet, dass** ein Suspensionskonzentrat gemäß einem oder mehreren der Ansprüche 1 - 6 oder ein Mittel gemäß Anspruch 8 auf die Schadpflanzen, Pflanzenteile, Pflanzensamen oder die Fläche auf der die Pflanzen wachsen, appliziert wird.
